# EUROPEAN PATENT APPLICATION

(11) **EP 0 903 870 A2**
(43) Date of publication of application: **24.03.1999**
(21) Application number: 98117062.4
(22) Date of filing: 09.09.1998
(51) Int. Cl.: H04B 1/707

(54) **CDMA radio communication apparatus**

(30) Priority: 20.09.1997 JP 273737/97
(71) Applicant: MATSUSHITA ELECTRIC INDUSTRIAL CO., LTD., Kadoma-shi, Osaka 571-8501 (JP)
(72) Inventor: Suzuki, Akira, Shibuya-ku, Tokyo 151-0066 (JP)
(74) Representative: Grünecker, Kinkeldey, Stockmair & Schwanhäusser Anwaltssozietät

(57) **Abstract**

In the case where known reference signal despreader/correlator 102 functioning as a searcher detects a higher known reference signal than a current signal, known reference signal despreader/correlator 102 functioning as a searcher is connected to specific code despreader/correlator 105 for capturing symbol data of a communication channel from a depsread signal after the synchronization in known reference signal despreader/correlator 102 with the detected known reference signal is acquired.

## Description

### BACKGROUND OF THE INVENTION

### Field of the Invention

The present invention relates to a radio communication apparatus using a CDMA system.

### Description of the Related Art

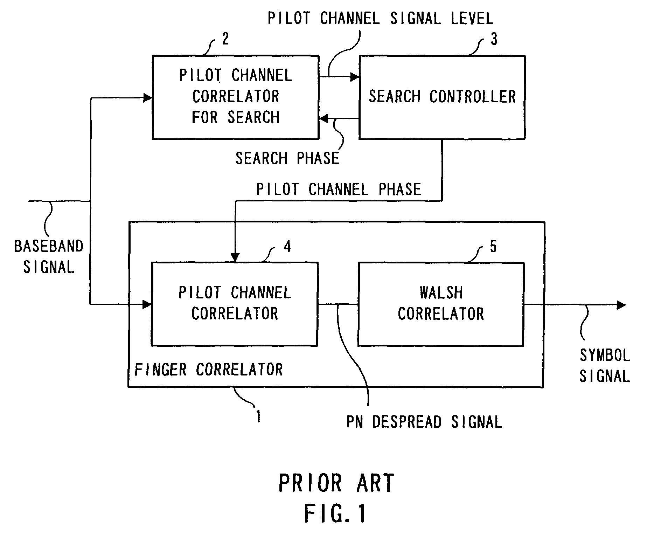

An explanation is given to a conventional radio communication apparatus using a CDMA system (hereinafter described as CDMA radio communication apparatus) with reference to FIG.1.

FIG.1 is a block diagram of a configuration of a conventional CDMA radio communication apparatus. This conventional CDMA radio communication apparatus comprises finger correlator 1 for receiving a communication channel, pilot channel search correlator 2 for searching a pilot channel, search controller 3 for detection a base station apparatus. And finger correlator 1 comprises known reference signal despreader/correlator 4 for despreading a baseband signal with a PN code, and Walsh code correlator 5 for despreaing the PN code despread signal with a Walsh code to output a symbol signal of a communication channel. In addition, a pilot channel is spread with a PN code, and a communication channel is spread with a PN code and further with a Walsh code.

Next an explanation is given to a reception operation in a conventional CDMA radio communication apparatus configured as described above.

A base station apparatus (not shown) spreads a pilot channel and a communication channel separately with a PN code of the same phase, multiplexes them and multiples a carrier frequency to transmit. A CDMA radio communication apparatus receives this base station transmitted signal, converts the received signal into a baseband signal without a carrier frequency component, and inputs the baseband signal to finger correlator 1.

In finger correlator 1, pilot channel despreader/correlator 4 despreads a baseband signal with a PN code, and outputs the PN code despread signal to Walsh correlator 5. Walsh correlator 5 despreads the inputted PN code despread signal with a Walsh code, and outputs a symbol signal of a communication channel.

Next an explanation is given to an operation for detecting a base station in a conventional CDMA radio communication apparatus. Since each of base stations has a specific PN phase, a CDMA radio communication apparatus can detect a base station apparatus transmitting a signal of a higher level by measuring the pilot channel level, sequentially varying a PN phase.

Search controller 3 provides, according to a search starting position and a search range included in a call control message transmitted from a base station apparatus, a search phase to pilot channel search correlator 2. Pilot channel search correlator 2 despreads a baseband signal with a PN code of the PN phase and measures a pilot channel level at the PN phase to output the measured result to search controller 3.

Thus, since search controller 3 can detect where a pilot channel exits in a search range, in the case of detecting a pilot channel with a higher level than the channel monitored in finger correlator 1, search controller 3 outputs the detected pilot channel phase to finger correlator 1. Finger correlator 1 sets the synchronization of a PN phase of internal pilot channel despreader/correlator 4 with the synchronization of the inputted PN phase, and pilot channel despreader/correlator 4 despreads a baseband signal with a PN code of the PN phase, and outputs the PN code despread signal to Walsh code correlator 5.

Walsh code correlator 5 despreads the PN code despread signal with a Walsh code, and outputs a symbol signal of a communication channel. Thus, a CDMA radio communication apparatus monitors a communication channel transmitted from a newly detected base station apparatus.

However, in a conventional CDMA radio communication apparatus, since it takes a constant time in the synchronization processing for finger correlator 1 to set the synchronization of a PN phase of pilot channel despreader/correlator 4 with the synchronization of a PN phase of the detected pilot channel, it is not possible for finger correlator 1 to receive a signal during the synchronization procesing, and to output a symbol singal. That remains the problem that the speech quality deteriorates.

### SUMMARY OF THE INVENTION

The object of the present invention is to provide a CDMA radio communication apparatus capable of outputting a symbol signal continuously without an intermission with the high speech quality.

This object is achieved by a CDMA radio communication apparatus for connecting, in the case where a known reference signal despreader/correlator detects a known reference signal of a higher level than current one, the known reference signal despreader/correlator for the search with specific code despreader/correlator for capturing symbol data of communication channel from a despread signal after acquired the syncronization with the detected known reference signal.

### BRIEF DESCRIPTION OF THE DRAWINGS

FIG.1 is a block configuration diagram of a conventional CDMA radio communication apparatus;
FIG.2 is a block diagram illustrating a configuration of a CDMA radio communication apparatus in the first embodiment of the present invention;
FIG.3 is a block diagram illustrating a configuration of a CDMA radio communication apparatus in the second embodiment of the present invention;
FIG.4 is a block diagram illustrating a configuration of a CDMA radio communication apparatus in the third embodiment of the present invention;
FIG.5 is a block diagram illustrating a configuration of a CDMA radio communication apparatus in the fourth embodiment of the present invention; and
FIG.6 is a block diagram illustrating a configuration of a CDMA radio communication apparatus in the fifth embodiment of the present invention.

### DETAILED DESCRIPTION OF THE PREFERRED EMBODIMENTS

A CDMA radio communication apparatus in the scope of the present invention comprises a plurality of known reference signal despreader/correlators for searching a known reference signal and depsreading the known reference signal, a specific code despreader/correlator for capturing specific symbol data from an output in the known reference signal despreader/correlator, a connector for transmitting a despread output from the known reference signal despreader/correlator to the specific code despreader/correlator, a control section for providing the search instruction to another known reference signal despreader/correlator that is not connected with the specific code despreader/correlator, and instructing the connecting section to connect a known reference signal despreader/correlator detecting a known reference signal of a higher level than that of current one to the specific code despreader/correlator after acquired the synchronization with the detected known reference signal.

According to this constitution, since the known reference signal despreader/correlator detecting a higher level of known reference signal is connected with the specific code despreader/correlator instantly, the specific code despreader/correlator can output a symbol signal continuously without an intermission. That allows the apparatus to provide the high quality communication.

And a CDMA radio communication apparatus in the scope of the present invention has the constitution where all known reference signal despreader/correlators are used to search a known reference signal during the specific code despreader/correlator are not outputting a symbol signal.

According to this constitution, a plurality of known reference signal despreader/correlators can be used concurrently to search a known reference signal, which permits to promptly detect a known search reference signal.

And a CDMA radio communication apparatus in the scope of the present invention has the constitution where all known reference signal despreader/correlator are used for the first known reference signal search after the power is supplied.

According to this constitution, a plurality of known reference signal despreader/correlators can be used to concurrently search a known reference signal, which allows the first search of a known reference signal after the power is supplied.

And a CDMA radio communication apparatus in the scope of the present invention has the constitution where all known reference signal despreader/correlators are used for the first search of a known reference signal in a handoff.

According to this constitution, since a plurality of known reference signal despreader/correlators can be used to concurrently search a known reference signal, the first search of a known reference signal in a handoff is performed promptly.

And a CDMA radio communication apparatus in the scope of the present invention has the constitution where all correlators are used for the first search of a known reference signal in restarting a reception from the termination state in a waiting operation for an intermittent reception.

According to this constitution, since a plurality of known reference signal despreader/correlators can be used to concurrently search a known reference signal, it is possible to detect a known reference signal promptly when starting a reception operation after waked from an intermittent waiting state.

And a CDMA radio communication apparatus in the scope of the present invention has the constitution where a search range for the search of a known reference signal is separated into a plurality of ranges, and each separated range is assigned to each known reference signal despreader/correlator.

According to this constitution, a search range for each correlator can be reduced, which allows to detect a known reference signal promptly.

And in a CDMA radio communication apparatus in the scope of the present invention, the known reference signal despreader/correlator is a pilot channel correlator to PN despread a pilot channel, and the specific code despreader/correlator is a Walsh code correlator to despread the PN despread signal with the Walsh code.

And in a CDMA radio communication apparatus in the scope of the present invention, in the case where a known reference signal despreader/correlator for the search detects a higher known reference signal level than current one, the known reference signal correlator for the search is connected with a specific code correlator for capturing symbol data of a communication channel from a despread signal after acquired the synchronization of the known reference signal despreader/correlator with the detected known reference signal.

In this manner, the connection of the specific code correlator can be switched from one known reference signal despreader/correlator to another known reference signal despreader/correlator instantly, and the specific code correlator can receive a communication channel without an intermission, which allows the apparatus to provide the high quality communication.

The scope of the present invention provides a mobile station apparatus comprising the CDMA radio communication apparatus described above for performing a radio communication with a base station apparatus.

According to this constitution, it is possible to receive a communication channel signal without an intermission and to perform the high quality communication.

In addition, in the present invention, a known reference signal includes, for instance, pilot channel signal, perch channel signal and pilot symbol.

Next the embodiments of the present invention are explained with reference to drawings.

### (First embodiment)

A CDMA radio communication apparatus in the first embodiment of the present invention is configured to receive a communication channel signal without an intermission, by connecting a known reference signal correlator and a specific correlator after the known reference signal correlator detecting a higher known reference signal completed the synchronization processing.

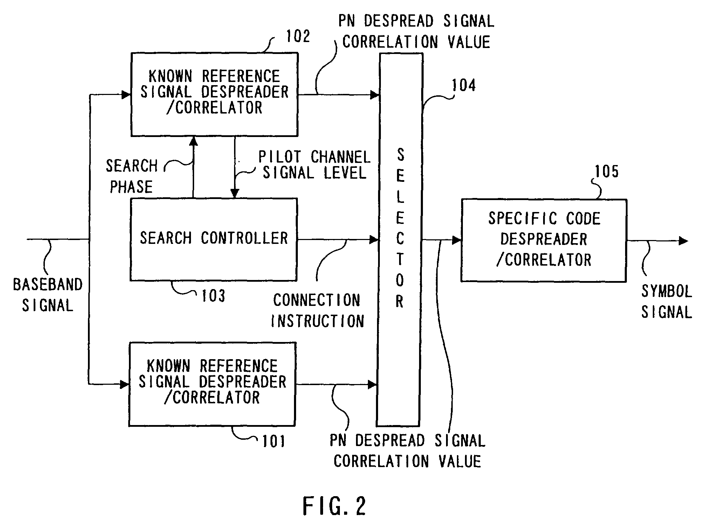

FIG.2 is a block diagram illustrating a configuration of a CDMA radio communication apparatus in the first embodiment of the present invention.

The CDMA radio communication apparatus in the first embodiment of the present invention comprises known reference signal despreader/correlators 101 and 102 for despreaing a baseband signal with a PN code and detecting the correlation, search controller 103 for detecting a base station apparatus, selector 104 for connecting a known reference signal despreader/correlator detecting a higher known reference signal and a specific code depareader/correlator described later, while selecting a known reference signal despreader/correlator detecting a high known reference signal, and specific code despreader/correlator 105 for despreading a PN code despread signal with a specific predetermined code to output a symbol signal of a communication channel. In addition, a known reference signal is spread with a PN code, and a communication channel signal is spread with a PN code and further a specific code.

For instance, in the case where a known reference signal is a pilot channel signal, known reference signal despreader/correlator despreads a pilot channel signal to detect the correlation, a specific code depsreader/correlator despreads the PN code despread signal with a Walsh code to detect the correlation.

Next an explanation is given to a reception operation in a CDMA radio communication apparatus in the first embodiment of the present invention configured as described above. Herein, the explanation is given to the case where a known reference signal is a pilot channel signal.

A base station apparatus (not shown) spreads a pilot channel signal and a communication channel signal separately with a PN code of the same phase, multiplexes them and multiples a carrier frequency to transmit. A CDMA radio communication apparatus receives the base station transmitted signal, converts the received signal into a baseband signal in which a carrier frequency component is removed, and inputs the baseband signal to known reference signal despreaders/correlators 101 and 102.

Known reference signal despreader/correlator 101 despreads a baseband signal with a PN code, and outputs the PN despread signal to selector 104. Ordinary this selector 104 connects known reference signal despreader/correlator 101 and specific code despreader/correlator 105. Selector 104 switch the connection between the known reference signal despreader/correlator 101 and specific code despreader/correlator 105 and the connection between the known reference signal despreader/correlator 101 and specific code despreader/correlator 105. Specific code despreader/correlator 105 despreads the PN despread signal with a specific code, for instance, with Walsh code, and outputs a symbol signal of a communication channel signal.

Since each of base stations has a specific PN phase, a CDMA radio communication apparatus detects a base station apparatus for transmitting a channel of a higher signal level by measuring the pilot channel signal level while varying a PN phase sequentially.

Search controller 103 uses known reference signal depsreader/known reference signal despreader/correlator 102 for the search (hereinsfter described as pilot channel search correlator) that is not connected with a specific code despreader/correlator 105. Search controller 103 provides, according to a search starting position and a search range described in a call control message transmitted from a base station apparatus, a search phase of a PN code to pilot channel search known reference signal despreader/correlator 102 sequentially. Pilot channel search correlator 102 to which the search phase is inputted despreads a baseband signal with a PN code of the PN phase and measures a pilot channel level at the PN phase by integrating the despread value to output to search controller 103.

In the case where search controller 103 to which the pilot channel level is inputted detects a higher pilot channel signal than the pilot channel signal that known reference signal despreader/correlator is currently monitoring, search controller 103 controls pilot channel search known reference signal despreader/correlator 102 to acquire the synchronization with the phase of the detected pilot channel phase, and after the synchronization is acquired, instructs selector 104 to connect an output of pilot channel search known reference signal despreader/correlator 102 with an input of specific code despreader/correlator 105.

After receiving the instruction of a known reference signal despreader/correlator to connect (in this case, pilot channel search correlaator 102) from search controller 103, selector 104 connects the known reference signal deapreader/correlator with specific code despreader/correlator 105. Specific code despreader/correlator 105 deapreads the PN despread signal with a specific code, for instance, with the Walsh code to output a symbol signal of a communication channel signal.

Known reference signal despeader/corerlator 101 not selected already by selector 104 performs the similar operation with that known reference signal despreader/correlator was performing before selected. In other words, known reference signal despeader/corerlator 101 despreads a baseband signal with a PN code of a PN phase, and measures the pilot channel level at the PN phase by integrating the despread value to output search controller 103.

As described above, according to a CDMA radio communication apparatus in the first embodiment of the present invention, since it is possible to connect a known reference signal despreader/correlator detecting a higer pilot channel signal level with a specific code despreader/correlator instantly, the specific code deapreader/correlator can receive a communication channel signal without an intermission and performs the high quality communication.

### (Second Embodiment)

Next an explanation is given to a CDMA radio communication apparatus in the second embodiment of the present invention. A CDMA radio communication apparatus in the second embodiment of the present invention is configured to use all known reference signal despreader/correlators in the initial search for searching all PN phases after the power is supplied.

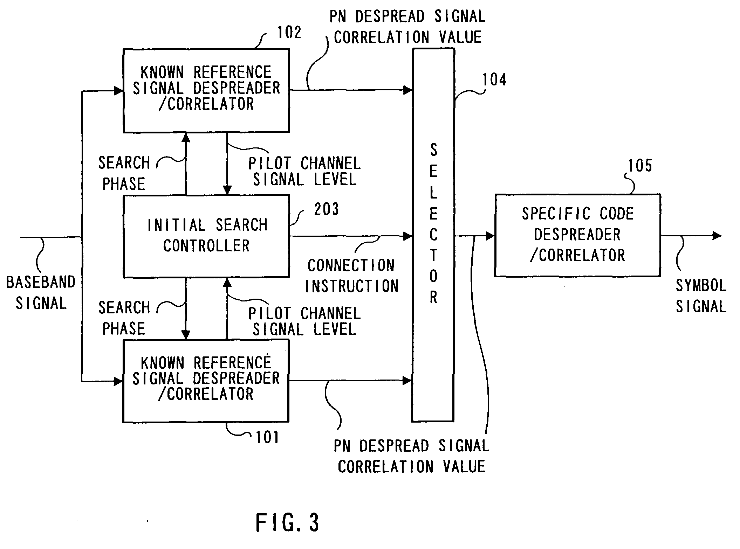

FIG.3 is a block diagram illustrating a configuration of a CDMA radio communication apparatus in the second embodiment of the present invention.

In the second embodiment, initial search controller 203 is prepared to detect a known reference signal of a base station apparatus after the power is supplied, instead of search controller 103 in the first embodiment descried above. The other configuration is the same as that in the first embodiment, and its explanation is omitted.

Next an explanation is given to a reception operation in a CDMA communication apparatus in the second embodiment of the present invention. Herein the explanation is given to the case where a known reference signal is a pilot channel signal.

In the case of detecting a pilot channel signal of a base station apparatus at the first time after the power is supplied in a CDMA radio communication apparatus, initial search controller 203 separates all PN phases into the number of equipped known reference signal despreader/correlators (two in the second embodiment), and provides a search phase to known reference signal despreader/correlators 101 and 102 sequentially according to the separated search range. Known reference signal despreader/correlators 101 and 102 to which the search phase is inputted despread a baseband signal with a PN code of the PN phase, and measure a pilot channel signal level at the PN phase to output to initial search controller 203.

At the time when either of the known reference signal correlators detects a pilot channel signal, initial search controller 203 to which the pilot channel signal level is inputted controls the known reference signal correlator to acquire the synchronization with the detected pilot channel phase, then after the synchronization is acquired, instructs selector 104 to select an output of the known reference signal despreader/correlator to be inputted to a specific code despreader/correlator.

Selector 104 receives the instruction of the known reference signal despreader/correlator to be selected from initial search controller 203, and connects the known reference signal despreader/correlator and specific code despreader/correlator 105. Specific code despreader/correlator 105 despreads a PN depread signal with a specific code, for instance, with the Walsh code, and outputs a symbol signal of a communication channel siganl.

As described above, in a CDMA radio communication apparatus in the second embodiment of the present invention, it is possible to operate a plurality of known reference signal despreader/correlators as a known reference signal search despreader/correlator concurrently in parallel, which allows the apparatus to search a known reference signal promptly after the power is supplied.

### (Third embodiment)

Next, an explanation is given to a CDMA radio communication apparatus in the third embodiment of the present invention.

A CDMA radio communication apparatus in the third embodiment of the present invention is configured to use all known reference signal despreader/correlators for the known reference signal search during a communication channel signal is not received in the case of a hard handoff in which a communication break occurs.

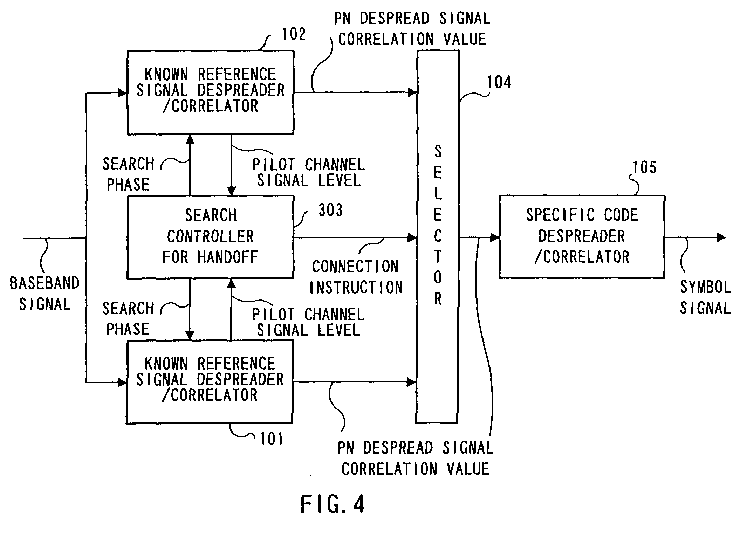

FIG.4 is a block diagram illustrating a configuration of a CDMA radio communication apparatus in the third embodiment of the present invention. Herein, the explanation is given to the case where a known reference signal is a pilot channel signal.

In the third embodiment, instead of search controller 103 in the first embodiment, handoff search controller 303 is prepared to assign a search range to a plurality of known reference signal despreader/correlators so that the correlators perform the search processing concurrently in parallel in the case of a hard handoff. The other configuration is the same as that in the first embodiment, and its explanation is omitted.

Next an explanation is given to a reception operation in a CDMA radio communication apparatus in the third embodiment of present invention.

Handoff is a transition to a new communication channel while in a specific code correlator receiving a communication channel signal of a base station apparatus having the detected pilot channel signal. In a CDMA radio communication apparatus, in the case of the handoff, a signal break sometimes occurs because a communication channel can not be received during the handoff processing. For instance, in the case where a carrier frequency of a pilot channel and a communication channel of a base station searched is different from that of current one, a communication channel signal can not be received during switching the carrier frequency. The handoff where a signal break occurs, like this case, is called a hard handoff.

Since the signal break is unavoidable in this case, it is preferable to disconnect specific code despreader/correlator 105 and a known reference signal despreader/correlator and use all known reference signal despreader/correlators 101 and 102 for the known reference signal search in handoff.

Handoff search controller 303 separates a PN phase search range into the number of equipped known reference signal despreader/correlators (two in the third embodiment), and provides a search phase to known reference signal despreader/correlators 101 and 102 sequentially according to the separated search range. Known reference signal despreader/correlators 101 and 102 despread a baseband signal with a PN code of the PN phase, and measure a pilot channel signal level at the PN phase to output to handoff search controller 303.

At the time when either of known reference signal correlators detects a pilot channel, handoff search controller 303 to which the pilot channel level is inputted control the known reference signal despreader/correlator to acquire the synchronization with the detected pilot channel phase, then after the synchronization is acquired, instructs selector 104 to input an output of the known reference signal despreader/correlator to the specific code despreader/correlator.

Selector 104 receives the instruction of the known reference signal despreader/correlator to be connected from handoff search controller 303, and connects the known reference signal despreader/correlator and specific code despreader/correlator 105. Specific code despreader/correlator 105 despreads a PN depread signal with a specific code, for instance, with the Walsh code, and outputs a symbol signal of a communication channel signal.

As described above, in a CDMA radio communication apparatus in the third embodiment of the present invention, it is possible to operate a plurality of known reference signal despreader/correlators as a known reference signal search despreder/correlator concurrently in parallel, which allows the apparatus to search a known reference signal promptly when a hard handover is performed.

### (Fourth embodiment)

Next an explanation is given to a CDMA radio communication apparatus in the fourth embodiment of the present invention. A CDMA radio communication apparatus in the fourth embodiment of the present invention is configured to use all known reference signal despreader/correlators for the known reference signal search when starting a reception operation after waked from an intermittent state in an operation of intermittent waiting.

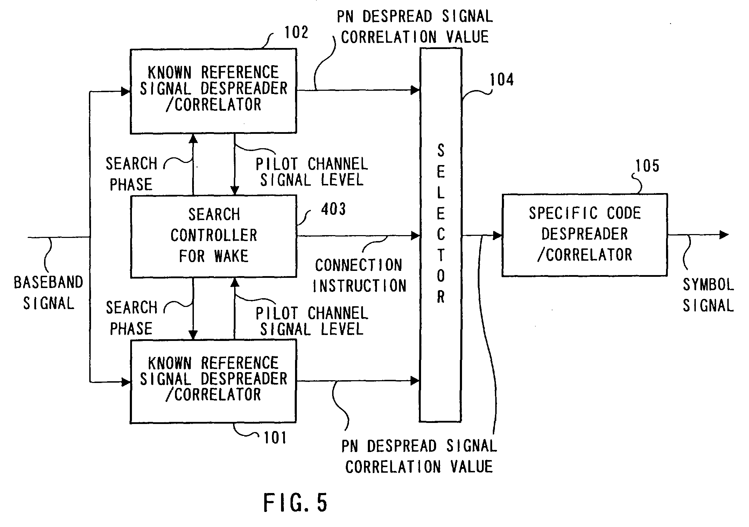

FIG.5 is a block diagram illustrating a configuration in the fourth embodiment of the present invention. Herein the explanation is given to the case where a known reference signal is a pilot channel signal.

In the fourth embodiment, instead of search controller 103 in the first embodiment described above, wake search controller 403 is prepared to control all known reference signal despreader/correlators to use for the known reference signal search in a waking operation from an intermittent state. The other configuration is the same as that in the first embodiment, and its explanation is omitted.

Next, an explanation is given to an operation of a CDMA radio communication apparatus in the fourth embodiment of the present invention configured described above. Hereinafter, in an operation of waiting to restart a reception during an periodically termination, a pilot channel signal search performed at the time of restarting a reception is called wake pilot channel signal search.

During the period from the reception termination period to complete a wake pilot channel signal search to obtain a pilot channel signal, a specific code despreader/correlator can not receive a channel signal. Accordingly, wake search controller 403 uses all known reference signal despreader/correlators 101 and 102 for the wake pilot channel signal search.

Wake search controller 403 separates all PN phases into the number of equipped known reference signal despreader/correlators (two in the fourth embodiment), and provides a search phase to known reference signal despreader/correlators 101 and 102 sequentially according to the separated search range. Known reference signal despreader/correlators 101 and 102 despread a baseband signal with a PN code of the PN phase, and measure a pilot channel signal level at the PN phase to output to wake search controller 403.

At the time when either of the known reference signal despreader/correlators detects a pilot channel signal, wake search controller 403 to which the pilot channel signal level is inputted controls the known reference signal despreader/correlator to acquire the synchronization with the detected pilot channel phase, then after the synchronization is acquired, instructs selector 104 to input an output of the known reference signal despreader/correlator to a specific code despreader/correlator.

Selector 104 receives the instruction of the known reference signal despreader/correlator to be connected from wake search controller 403, and connects the known reference signal despreader/correlator and specific code despreader/correlator 105. Specific code despreader/correlator 105 despreads a PN depread signal with a specific code, for instance, with the Walsh code, and outputs a symbol signal of a communication channel.

As described above, in a CDMA radio communication apparatus in the fourth embodiment of the present invention, it is possible to operate a plurality of known reference signal despreader/correlators as a wake known reference signal search correlator concurrently in parallel, which allows the apparatus to search a known reference signal promptly at the time of restarting a reception after waked from an intermittent state.

In the first embodiment up to the fourth embodiment, the explanations are given to the case where the number of known reference signal despreader/correlators is two. However the present invention is applicable to the case where the number of despreader/correlators is not less than three.

### (Fifth Embodiment)

Next, a CDMA radio communication apparatus in the fifth embodiment of the present invention is explained. In a CDMA communication apparatus according to the first embodiment up to the fourth embodiment, one specific code depsreader/correlator is used. In the fifth embodiment of the present invention, a plurality of specific code despreader/correlators are used, and some signals with high known reference signal level are synthesized. Herein, the explanation is the case of using all known reference signal despreader/correlators for the search in the initial search of searching all PN phases after the power is supplied.

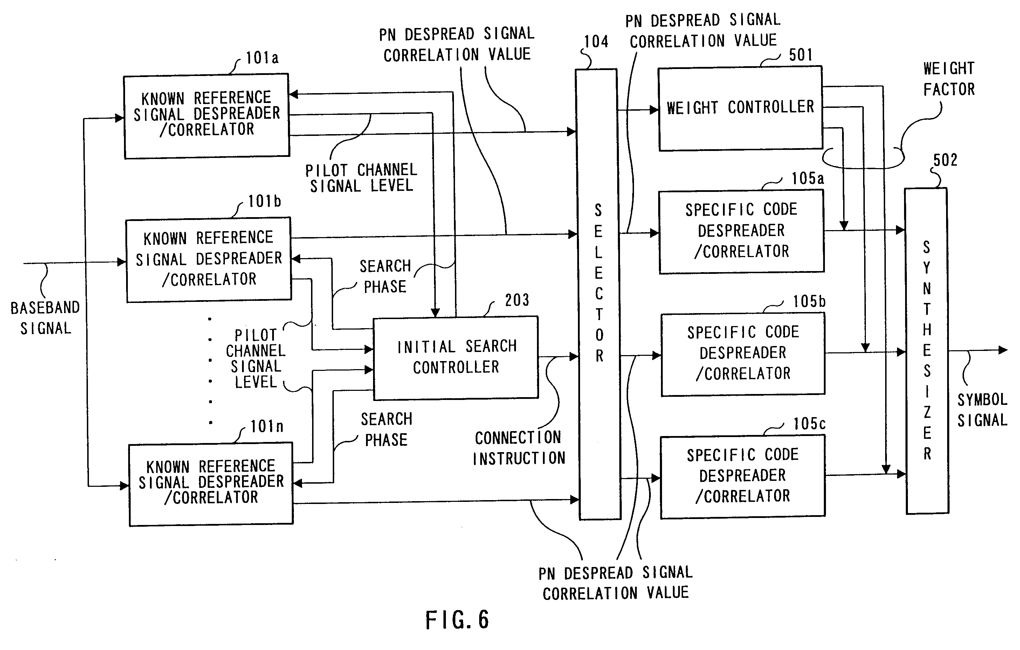

FIG.6 illustrates a block diagram of a configuration of a CDMA communication apparatus in the fifth embodiment of the present invention.

In a CDMA communication apparatus illustrated in FIG.6, a plurality of known reference signal despreader/correlators 101a up to 101n and three specific code despreader/correlators 105a to 105c are prepared via initial search controller 203 and selector 104. And weighting controller 501 for controlling a weighting factor to multiply a PN depsread signal based on the selection information from selector 104 is prepared, and further synthesizer 502 for synthesizing a PN despread signal multiplied by the weighting factor is prepared.

Next, a reception operation in a CDMA communication apparatus in the fifth embodiment of the present invention is explained. Herein, an explanation is given to the case where a known reference signal is a pilot channel signal.

In the case of detecting a pilot channel signal of a base station apparatus at the first time after the power is supplied in a CDMA communication apparatus, initial search controller 203 separates all PN phases into the number of equipped known reference signal despreader/correlators (n numbers in the fifth embodiment), and provides a search phase to known reference signal desprader/correlators 101a up to 101n according to the separated search range sequentially. Known reference signal despreader/correlators 101a up to 101n to which the search phase is inputted despread a baseband signal with a PN code of the phase, and measure a pilot channel signal level at the PN phase to output to initial search controller 203.

At the time when the known reference signal dspreader/correlator detects a pilot channel signal, initial search controller 203 to which the pilot channel level is inputted controls the known reference signal depsreader/correlators to acquire the synchronization with the detected pilot channel phase, then after the synchronization is acquired, instructs selector 104 to input an output from the known reference signal despreader/correlator to an specific code despreader/correlator.

Selector 104 receives the instruction of the known reference signal despreader/correlator to be connected from initial search controller 203, in other words, receives the instruction to select three known reference signal despreader/correlators with the highest to the third highest level, selector 104 connects each of the known reference signal despreader/correlators to specific code despreader/correlators 105a up to 105c. Specific code despreader/correlators 105a up to 105c despread a PN depspread code with an specific code, for instance, with the Walsh code.

The signals despsread in specific code despreader/correlators 105a up to 105c are multiplied the weighting factor set in weighting controller 501 corresponding to the selected known reference signal despreader/correlator, and processed by the symbol combining, for instance, RAKE combining in synthesizer 502. Thus, a symbol signal of a communication channel signal is outputted.

As described above, according to the CDMA communication apparatus in the fifth embodiment of the present invention, it is possible to operate a plurality of known reference signal despreader/correlators concurrently as a search known reference signal despreader/correlator in parellel, which allows the apparatus to search a known reference signal promptly after the power is supplied. And since signals obtained using a plurality of depsreader/correlators are combined, it is possible to improve the reception quality.

In the first embodiment up to the fifth embodiment, the correlation detection, the search of a channel signal and/or the selection of a channel signal may be performed using software or hardware.

Although the explanations are given to the case where a pilot channel signal is used as a known reference signal in the first embodiment up to the fifth embodiment, it is possible to apply the present invention to the case where a pilot symbol signal or a perch signal is used as a known reference signal in the same manner as that of the above case.

Especially, in the case of using a pilot symbol to be inserted in a frame as a known reference signal, a known reference signal despreader/corerlator detects the correlation of the pilot symbol like burst to detect the timing, processes the interpolation compliment of the correlation data, and outputs the obtained data to a specific code despreader/correlator. The specific code despreader/correlator demodulates the data using the inputted data of the pilot symbol.

Although the explanations are given to the case where a reception level is used as a parameter to select a known reference signal in the first embodiment up to the fifth embodiment, it is preferable in the present invention to use the reception quality such as SIR (signal to interference ratio) as a parameter to select a known reference signal and further preferable to use history information of a known reference signal and the information from a base station. In addition, there are no particular limitations in a measurement method of each parameter.

And it is possible to combine the first up to the fifth embodiments appropriately to practice the present invention. And a CDMA radio communication apparatus of the present invention is applicable to a terminal apparatus such as a mobile station in radio communication system.

As described above, in the present invention, since the connection is switched instantly to a correlator detecting a higher known reference signal, the switched correlator can receive a communication channel signal without a signal break, which allows the apparatus provide the high quality communication.

## Claims

1. A CDMA radio communication apparatus comprising:
a plurality of known reference signal correlators(101,102) for despreading a known reference signal, while searching the known reference signal;
a specific code correlator(105) for obtaining symbol data from a despread output in said known reference signal correlator(101, 102); and
selecting means(104) for selecting the known reference signal correlator(102) detecting the highest known reference signal from among said plurality of known reference signal correlators.

2. The CDMA radio communication apparatus according to claim 1, wherein said selecting means(104) connects the known reference signal correlator(102) detecting the highest known reference signal and said specific code correlator(105).

3. The CDMA radio communication apparatus according to claim 1, wherein said plurality of known reference signal correlators except the known reference signal correlator detecting the highest known reference signal search a known reference signal higher than a current known reference signal.

4. The CDMA radio communication apparatus according to claim 1, further comprising control means(103) for providing a search instruction to said plurality of known reference signal correlators except the known reference signal correlator detecting the highest known reference signal, and controlling the known reference signal correlator detecting the highest known reference signal to acquire the synchronization with the detected known reference signal.

5. The radio communication apparatus according to claim 1 for using all known reference signal correlators in the first search of a known reference signal after power is supplied.

6. The CDMA radio communication apparatus according to claim 1 for using all known reference signal correlators in the first pilot channel search at the time of performing a handoff.

7. The CDMA radio communication apparatus according to claim 1 wherein when restarting a reception after a termination state in an intermittent reception operation, in the first pilot channel search all known reference signal correlators is used.

8. The CDMA radio communication apparatus according to claim 1, wherein a search range of a known reference signal is separated into a plurality of ranges, and each separated range is assigned to each known reference signal correlator.

9. The CDMA radio communication apparatus according to claim 1, wherein said known reference signal correlator is a correlator for PN-despreading the known reference signal, and said specific code correlator is a Walsh code despreader/correlator for desprading the PN-despread signal with a Walsh code.

10. The radio communication apparatus according to claim 1, wherein a known reference signal is one selected from the group consisting of pilot channel signal, perch channel signal, and pilot symbol.

11. A CDMA radio communication apparatus comprising:
a plurality of known reference signal correlators for despreading a known reference signal, while searching the known reference signal;
selecting means for selecting at least one of a plurality of known reference signal correlators detecting a relatively high known reference signal from among said plurality of known reference signal correlators;
a plurality of specific code correlators for obtaining each symbol data from each despread output in each of the known reference signal correlators; and
synthesizing means for synthesizing symbol data obtained from said plurality of specific code correlators.

12. A communication terminal apparatus comprising a CDMA radio communication apparatus, said CDMA radio communication apparatus comprising:
a plurality of known reference signal correlators for despreading a known reference signal, while searching the known reference signal;
a specific code correlator for obtaining symbol data from a despread output in said known reference signal correlator; and
selecting means for selecting the known reference signal correlator detecting the highest known reference signal from among said plurality of known reference signal correlators.

13. A CDMA radio communication method, wherein in the case where a known reference signal correlator for a search detects a higher known reference signal than a current signal, said method comprising the steps of:
acquiring the synchronization in said known reference signal correlator for a search with the detected known reference signal;
connecting said known reference signal correlator to a specific code correlator; and
capturing symbol data of a communication channel from said specific code correlator using a PN deapread signal outputted from said known reference signal correlator for a search.
